# EUROPEAN PATENT SPECIFICATION

(11) **EP 3 342 636 B1**
(45) Date of publication and mention of the grant of the patent: **23.10.2019**
(21) Application number: 18150239.4
(22) Date of filing: 03.01.2018
(51) Int. Cl.: B60P 3/00

(54) **SELF-PROPELLED VEHICLE FOR HANDLING GLASS-SHEET SUPPORTING RACKS**
SELBSTFAHRENDES FAHRZEUG ZUR HANDHABUNG VON GLASPLATTENTRAGGESTELLEN
VÉHICULE AUTOPROPULSÉ POUR LA MANIPULATION DES BÂTIS DE SUPPORT DE FEUILLES DE VERRE

(30) Priority: 03.01.2017 IT 201700000306
(43) Date of publication of application: 04.07.2018
(73) Proprietor: ITALCARRELLI SRL, 36072 Chiampo (VI) (IT)
(72) Inventor: NEGRIN, Alessandro, 36072 CHIAMPO (IT)
(74) Representative: Bellemo, Matteo

(56) References cited:
- DE-A1- 3 305 840
- DE-U1-202008 003 946

## Description

The present invention relates to a self-propelled vehicle for handling glass-sheet supporting racks, such as disclosed in DE 20 2008 003946 U1.

More in detail, the present invention relates to a self-propelled transporter for handling glass-sheet supporting racks suitable for hosting large-sized glass sheets. Use to which the following disclosure will make explicit reference without however losing in generality.

As already known, self-propelled transporters for handling glass-sheet supporting racks are usually made up of a large front rack-supporting chassis and of a rear drive unit integral with each other and both equipped with ground-resting wheels.

Moreover, the self-propelled transporters are equipped with a hydraulically-operated lifting system that, on command, can vary the height of the rack-supporting chassis from the ground, while maintaining the chassis always parallel to itself and to the ground.

The rack-supporting chassis, in particular, basically consists of a U-shaped rigid structure which extends horizontally so as to form, astride of the midplane of the vehicle, a large horizontal rectilinear slot whose length and width are such as to accommodate a whole glass-sheet supporting rack, and which is open at the front to allow the entrance of the glass-sheet supporting rack.

Two idle ground-resting wheels are arranged at the front ends of the two longitudinal beams of the chassis, while the rear part of the rack-supporting chassis is firmly secured to the drive unit via a coupling system that allows the rack-supporting chassis to freely move with respect to the drive unit in the vertical direction.

The rear drive unit, on the other hand, is provided with a pair of driving and steering ground-resting wheels, with a propeller for driving into rotation the driving and steering wheels, and with a cockpit which is designed to house the driver of the vehicle and contains the steering wheel and the other control members needed to drive the transporter.

Unfortunately, the manoeuvrability of the self-propelled transporters for handling glass-sheet supporting racks is strongly conditioned by the size of the vehicle.

In fact, glass-sheet supporting racks are usually dimensioned to accommodate glass sheets up to 9 meters long, so that the longitudinal slot of the rack-supporting chassis must have a length of about 8 meters and a width of about 1,5 meters.

The overall length of a self-propelled transporter can therefore widely exceed 10 meters, making it extremely difficult to drive the vehicle inside a factory.

These problems of maneuverability have worsened with the recent appearance of glass-sheet supporting racks that can hold glass sheets or marble slabs reaching even 15 meters in length. In this case, in fact, the self-propelled transporter should have a total length of about 16 meters.

Aim of the present invention is therefore to realize a self-propelled transporter for lifting and handling large glass-sheet supporting racks that can overcome the aforementioned drawbacks.

In compliance with these aims, according to the present invention there is provided a self-propelled vehicle for handling glass-sheet supporting racks as defined in claim 1 and preferably, though not necessarily, in any one of the dependent claims.

The invention will now be described with reference to the accompanying drawings showing a non-limiting embodiment thereof, wherein:
- Figure 1 is an isometric view of a self-propelled vehicle for handling glass-sheet supporting racks realized according to the teachings of the present invention;
- Figure 2 is a side view of the self-propelled vehicle shown in Figure 1, with parts in section and parts removed for clarity's sake; whereas
- Figures 3 and 4 are two side views of the self-propelled vehicle shown in Figure 2 in two different operating configurations, with parts in section and parts removed for clarity's sake.

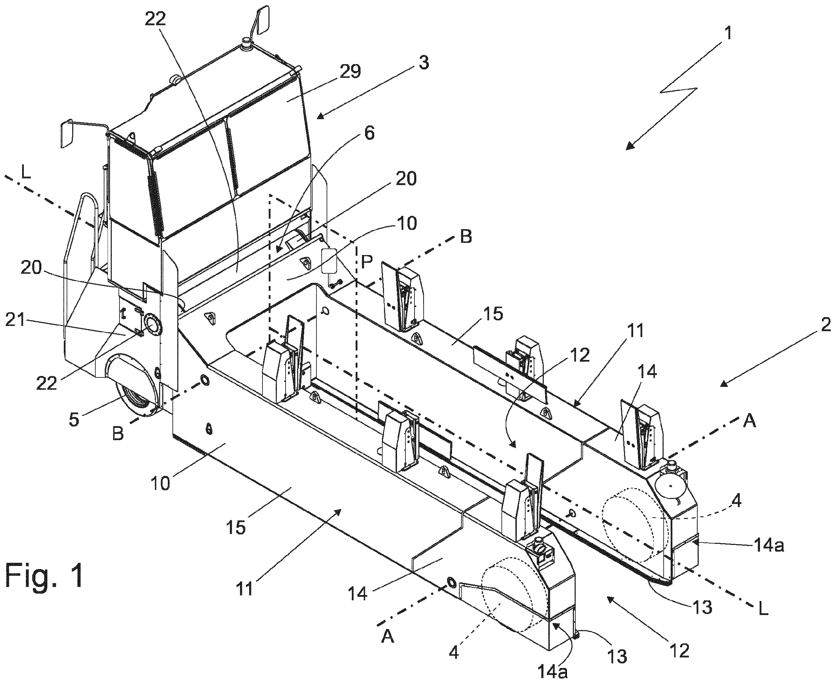

With reference to Figures 1, 2, 3 and 4, number 1 denotes as a whole a self-propelled vehicle specifically designed for safely handling glass-sheet supporting racks 100 adapted to support sheets or packs of large glass sheets or large marble slabs. Furthermore, the self-propelled vehicle 1 can also be used for safely handling loading platforms adapted to support large-sized plates and other structures made of reinforced concrete.

More in detail, the self-propelled vehicle 1 is particularly adapted to handle glass-sheet supporting racks 100 preferably with an A- or L- shaped frame, specifically dimensioned to support a variable number of glass sheets (not shown) preferably up to 15 meters long, arranged one adjacent to the other in a substantially upright position.

In other words, the self-propelled vehicle 1 is structured to grab, lift, move horizontally and finally lay again on the ground a glass-sheet supporting rack 100 adapted to support glass sheets preferably up to 15 meters long.

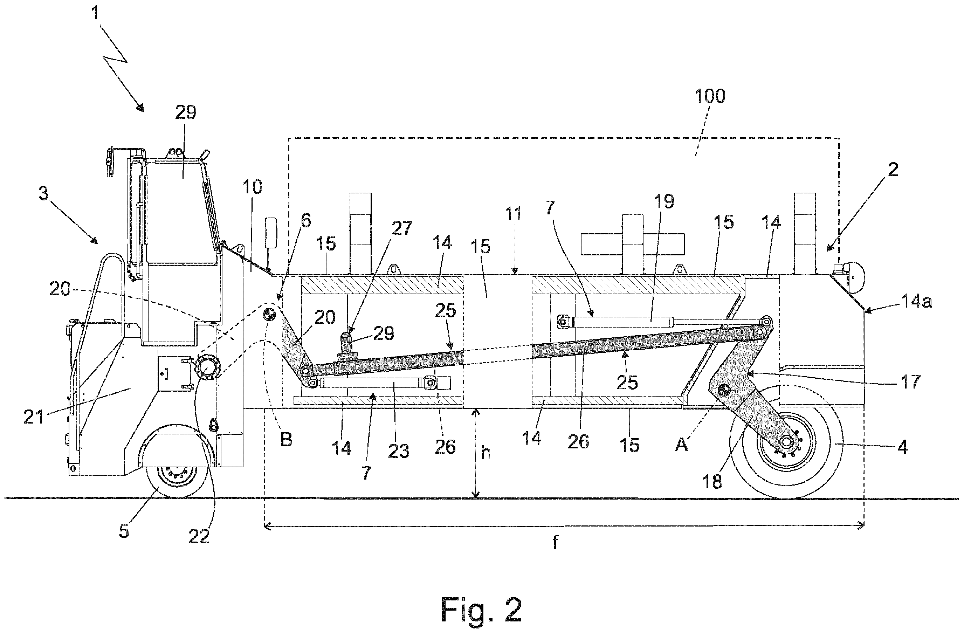

With reference to Figures 1 and 2, the self-propelled vehicle 1 comprises a rack-supporting chassis 2 and a rear drive unit 3, arranged one adjacent the other astride the vertical midplane of the vehicle P and both provided with ground-resting wheels.

More in detail, the front rack-supporting chassis 2 is able to couple with the glass-sheet supporting rack 100, and is provided with at least two ground-resting wheels 4 arranged on opposite sides of the vertical midplane of the vehicle P.

The rear drive unit 3, on the other hand, is preferably provided with at least two ground-resting wheels 5 that are arranged on opposite sides of the vertical midplane of the vehicle P, and is firmly connected to the rack-supporting chassis 2 via mechanical coupling means allowing the rack-supporting chassis 2 to move with respect to the drive unit 3 in a substantially vertical direction, i.e. orthogonally to the longitudinal axis of the vehicle L, while remaining on the vertical midplane of the vehicle P.

Even more in detail, the rear drive unit 3 is preferably firmly connected to the front rack-supporting chassis 2 via a swing arm linkage 6 that allows the rack-supporting chassis 2 to move relative to the drive unit 3 in a vertical direction, while always remaining on the vertical midplane of the vehicle P.

Preferably, the two ground-resting wheels 4 and the two ground-resting wheels 5 are furthermore arranged in substantially specular position on opposite sides of the vertical midplane of the vehicle P.

In other words, the self-propelled vehicle 1 is preferably provided with at least two front ground-resting wheels 4 and at least two rear ground-resting wheels 5, arranged substantially at the vertices of a rectangle.

Preferably, the wheels 4 arranged beneath the rack-supporting chassis 2 are idle and parallel to the vertical midplane of the vehicle P, whereas the wheels 5 arranged beneath the drive unit 3 are preferably driving and steering.

Furthermore, the self-propelled vehicle 1 is additionally provided with a preferably hydraulically- or pneumatically- operated, lifting apparatus 7 that, on command, can vary/ regulate the height h from the ground of rack-supporting chassis 2.

With reference to Figures 1 and 2, in particular, the rack-supporting chassis 2 is adapted to couple with the glass-sheet supporting rack 100, and comprises a substantially U-shaped, rigid oblong frame 10 preferably made of metallic material, which extends beside the drive unit 3 substantially parallel to the ground, i.e. horizontally, and is provided with two long tines or longitudinal beams 11 extending substantially horizontally and parallel to the longitudinal axis of the vehicle L, in substantially specular position on opposite sides of the vehicle midplane P.

The front ground-resting wheels 4 are arranged substantially at the front/distal ends of the two tines or longitudinal beams 11, while the rear part of the rigid oblong frame 10 is preferably connected to the drive unit 3 via the swing arm linkage 6.

The lifting apparatus 7 is adapted to vary/regulate, on command, the height h of the rigid oblong frame 10 from the ground, preferably also maintaining the rigid oblong frame 10 substantially parallel to itself and/or to the ground.

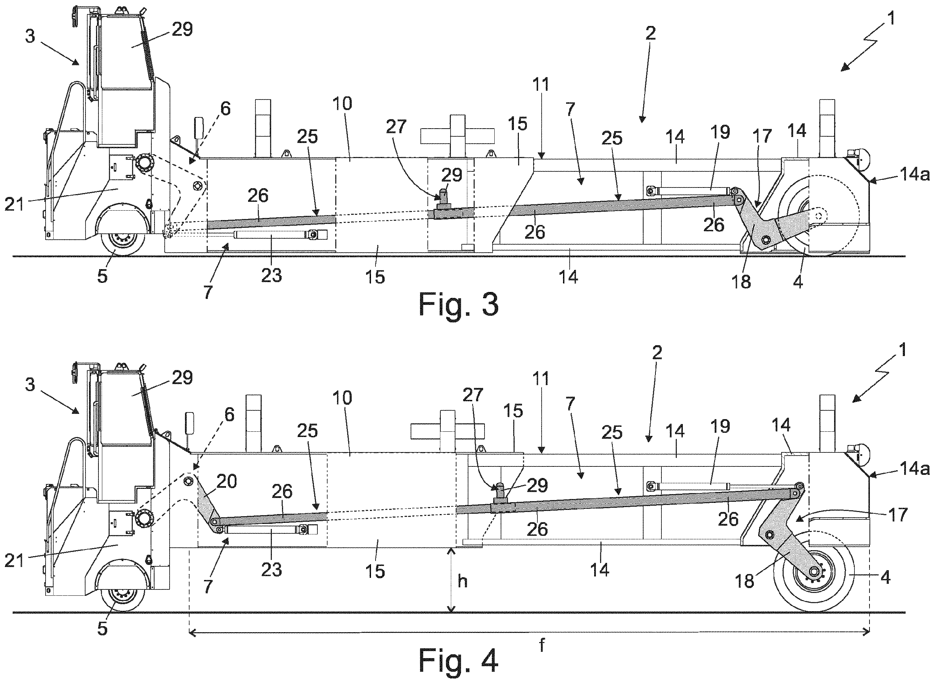

More in detail, the lifting apparatus 7 is adapted to vary, on command, the height h of the rigid oblong frame 10 from the ground between a maximum value (see Figures 2 and 4), preferably higher than 0,3 meters, and a minimum value (see Figures 1 and 3) in which the rack-supporting chassis 2 is roughly skimmed over the ground.

With reference to Figure 1, the two longitudinal beams 11 furthermore form/delimit a large rectilinear groove or slot 12 which extends parallel to the longitudinal axis of the vehicle L, substantially astride the vertical midplane of the vehicle P. The rectilinear groove or slot 12 is open at the front, and has a width substantially equal to the nominal width of the glass-sheet supporting racks 100, so as to be engaged in sliding manner by a glass-sheet supporting rack 100 arranged parallel to the longitudinal axis of the vehicle L.

In the shown example, in particular, the rectilinear groove or slot 12 has a width preferably ranging between 1 and 2 meters, and preferably, though not necessarily, equal to about 1,5 meters.

Moreover, each longitudinal beam 11 is additionally structured to couple to a respective longer side flank of the glass-sheet supporting rack 100 arranged inside the rectilinear groove or slot 12, so as to support/bear the glass-sheet supporting rack 100 when the rigid oblong frame 10 is at the maximum distance from the ground.

More in detail, the two longitudinal beams 11 of the rigid oblong frame 10 are preferably provided with one or more horizontal protruding shelves 13 that extend cantilevered within the rectilinear slot 12 preferably while remaining coplanar to one another, and are adapted to arranged themselves beneath the adjacent longer side flanks of the glass-sheet supporting rack 100 to sustain the glass-sheet supporting rack 100 when the rigid oblong frame 10 is at the maximum distance from the ground.

In other words, the rigid oblong frame 10 is structured so as to be able to forklift a glass-sheet supporting rack 100 oriented parallel to the longitudinal axis of the vehicle L, preferably while coupling in sliding manner to the same glass-sheet supporting rack 100.

With reference to Figures 1, 2, 3 and 4, each longitudinal beam 11 of the rigid frame 10 is furthermore divided into a front rectilinear segment 14 and a rear rectilinear segment 15 that are firmly coupled to one another in axially slidable manner, so that they are able to vary the overall axial length f of the longitudinal beam 11 between a given maximum and a given minimum values preferably respectively equal to 9 meters and to 15 meters.

The rear rectilinear segments 15 of the two longitudinal beams 11 are rigidly connected to one another so as to form the rear section of the rigid oblong frame 10.

The front rectilinear segments 14, on the other hand, are movable parallel to the longitudinal axis of the vehicle L, and support each at least one respective ground-resting wheel 4. In other words, the front ground-resting wheels 4 are arranged on the two front rectilinear segments 14.

More in detail, the front rectilinear segment 14 of each longitudinal beam 11 is coupled in axially slidable and angularly rigidly manner to the corresponding rear rectilinear segment 15, so as to be movable parallel to the longitudinal axis L between a retracted position and a completely extracted position.

In the retracted position (see Figures 1 and 2), the front rectilinear segment 14 is almost entirely retracted within the corresponding rear rectilinear segment 15 and the overall axial length f of the longitudinal beam 11 takes the minimum value.

In the fully extracted position (see Figures 3 and 4), the front rectilinear segment 14 cantileverly extends almost entirely from the rear rectilinear segment 15 and the overall axial length f of the longitudinal beam 11 takes the maximum value.

With reference to Figures 1 and 2, the rigid oblong frame 10 is therefore longitudinally divided into a rear section and a front section. The rear section is substantially U-shaped, is adjacent to the drive unit 3, and is preferably permanently coupled to the drive unit 3 via the swing arm linkage 6. The front section is coupled in axially sliding manner to the rear section and houses the ground-resting wheels 4.

In the shown example, in particular, the rear rectilinear segments 15 of the two longitudinal beams 11 preferably have a box-like structure to contain the front rectilinear segments 14.

In other words, the front rectilinear segments 14 are preferably telescopically coupled to the rear rectilinear segments 15.

Preferably, the front rectilinear segments 14 are furthermore dimensioned to protrude, when they are in the retracted position (see Figures 1 and 2), out of the corresponding rear rectilinear segments 15 solely with the distal end 14a.

Moreover, the front ground-resting wheels 4 are preferably arranged at the distal ends 14a of the front rectilinear segments 14 of the two longitudinal beams 11.

More in detail, with reference to Figures 2, 3 and 4, each ground-resting wheel 4 is fixed/connected to the corresponding front rectilinear segment 14, or rather to the distal end 14a of the corresponding front rectilinear segment 14, via a respective swing arm suspension 17.

In other words, each ground-resting wheel 4 is fixed in freely axially rotatable manner at the end of a swing arm 18 that extends substantially parallel to the vertical midplane of the vehicle P, and is preferably rockingly pivoted to the body of the front rectilinear segment 14, preferably at the distal end 14a, so as to be able to rotate about a rotation axis A transversal and substantially perpendicular to the vertical midplane of the vehicle P.

The rack-supporting chassis 2 is therefore provided with two swing arms 18 that are preferably arranged in substantially specular position on opposite sides of the vertical midplane of the vehicle P, and are rockingly pivoted to the distal ends 14a of the two longitudinal beams 11, so as to be able to separately rotate/swing about a same transversal rotation axis A, while remaining both locally substantially parallel to the vertical midplane of the vehicle P.

With particular reference to Figure 2, additionally to the swing arm 18, the swing arm suspension 17 moreover comprises a single- or double-acting hydraulic or pneumatic cylinder 19, which is interposed between the swing arm 18 and the front rectilinear segment 14 and can vary the tilt angle of the swing arm 18 with respect to the vertical.

The lifting apparatus 7 is adapted to drive the hydraulic or pneumatic cylinder 19 for controlling/varying the tilt angle of the swing arm 18 with respect to the vertical, and thus be able to regulate, on command, the height from the ground of the distal end 14a of the front rectilinear segment 14.

More in detail, each ground-resting wheel 4 is preferably housed in a cavity or wheel compartment present inside the distal end 14a of the front rectilinear segment 14 of the longitudinal beam 11.

The swing arm 18, on the other hand, is preferably substantially L-shaped and is rockingly pivoted to the front rectilinear segment 14 of the longitudinal beam 11 at its central elbow, so as to rotate inside the wheel compartment between a lowered position (see Figures 2 and 4) and a raised position (see Figures 1 and 3).

In the raised position, the swing arm 18 preferably places the ground-resting wheel 4 almost entirely out of the relative wheel compartment, so as to arrange the distal end 14a of the front rectilinear segment 14 of the longitudinal beam 11 at the maximum distance from the ground.

In the lowered position, the swing arm 18 preferably places the ground-resting wheel 4 almost entirely inside the relative wheel compartment, so as to arrange the distal end 14a of the front rectilinear segment 14 of the longitudinal beam 11 at the minimum distance from the ground.

The ground-resting wheel 4 is preferably mounted in axially rotatable manner on the lower end of the L-shaped swing arm 18.

The hydraulic or pneumatic cylinder 19, on the other hand, is preferably accommodated inside the front rectilinear segment 14 of the longitudinal beam 11, preferably locally substantially parallel to the longitudinal axis of the longitudinal beam, and is preferably interposed between the upper end of the L-shaped swing arm 18 and the front rectilinear segment 14.

With reference to Figures 1 and 2, on the other hand, the swing arm linkage 6 preferably comprises at least one swing arm 20 that extends substantially parallel to the vertical midplane of the vehicle P, has one end hinged on the body 21 of the drive unit 3 so as to be able to rotate with respect to the latter parallel to the vertical midplane of the vehicle P, and is preferably rockingly pivoted on the rear section of the rigid oblong frame 10 so as to be able to rotate about a transversal rotation axis B substantially perpendicular to the vertical midplane of the vehicle P.

More in detail, the swing arm linkage 6 preferably comprises: a pair of swing arms 20 that are arranged in substantially specular position on opposite sides of the vertical midplane of the vehicle P, have one end hinged on the body 21 of the drive unit 3 so as to be able to rotate with respect to the latter parallel to the vertical midplane of the vehicle P, and are finally preferably rockingly, pivoted to the rear section of the rigid oblong frame 10 so as to be able to rotate with respect to the latter about a transversal rotation axis B perpendicular to the vertical midplane of the vehicle P; and a transversal connecting member that rigidly connects the two swing arms 20 to one another, thus forcing them to rotate while remaining mutually aligned and facing.

In the example shown, in particular, the transversal connecting member preferably consists of a shaft 22 that extends perpendicularly to the vertical midplane of the vehicle P, and is secured in axially rotatable manner to the body 21 of drive unit 3 at a given height from the ground. The two swing arms 20 cantileverly extend from the shaft 22 in a substantially radial direction, i.e. parallel to the vertical midplane of the vehicle P, and are rigidly secured to the two ends of the shaft.

Preferably, each swing arm 20 is therefore rigidly secured to the transversal shaft 22 to rotate together with the latter, and is pivoted to the rear section of rigid oblong frame 10 so as to be able to freely rotate with respect to the latter about the rotation axis B.

Preferably, the lifting apparatus 7 furthermore comprises, preferably for each swing arm 20, a respective single- or double-acting hydraulic or pneumatic cylinder 23, which is interposed between the swing arm 20 and the rear section of rigid oblong frame 10, or rather the rear rectilinear segment 15 of longitudinal beam 11, so as to be able to control/vary the tilt angle of the swing arm 20 with respect to the vertical and thus being able to regulate the height of the rear section of rigid oblong frame 10 from the ground.

By appropriately controlling the hydraulic or pneumatic cylinders 19 and 23, the lifting apparatus 7 is therefore able to vary on command the height h of the rigid oblong frame 10 from the ground.

More in detail, with particular reference to Figure 2, each swing arm 20 is preferably substantially L-shaped, is rockingly hinged to the body 21 of drive unit 3 at a first end, and is finally pivoted to the rear section of rigid oblong frame 10 at its central elbow, so as to be able to free to rotate with respect to the rear section about the rotation axis B.

The hydraulic or pneumatic cylinder 23, on the other hand, is preferably accommodated inside the rear rectilinear segment 15 of the longitudinal beam 11, preferably locally substantially parallel to the longitudinal axis of the longitudinal beam, and is preferably interposed between the second upper end of the L-shaped swing arm 20 and the rear rectilinear segment 15 of the longitudinal beam 11.

With reference to Figures 2, 3 and 4, preferably the lifting apparatus 7 additionally comprises two longitudinal connecting rods 25 that mechanically connect the two swing arm suspensions 17 of the rack-supporting chassis 2 to the swing arm linkage 6, so as to force the swing arms 20 of swing arm linkage 6 to move in a synchronized manner with the swing arms 18 of swing arm suspensions 17 in order to vary the height h of the rigid oblong frame 10 from the ground while maintaining the rigid oblong frame 10 parallel to the ground.

More in detail, each swing arm 20 of swing arm linkage 6 is longitudinally aligned with a respective swing arm 18 of rack-supporting chassis 2.

The longitudinal connecting rod 25, in turn, extends along the longitudinal beam 11 from the swing arm suspension 17 to the swing arm linkage 6, and is butt hinged respectively to the swing arm 18 of swing arm suspension 17 and to the swing arm 20 of swing arm linkage 6 so as to force the two swing arms 18 and 20 to rotate in a synchronized manner.

In much more detail, each connecting rod 25 has the two axial ends hinged one to the swing arm 18, preferably near the hydraulic or pneumatic cylinder 19, and the other on the swing arm 20, preferably near the hydraulic or pneumatic cylinder 23, so as to force the two swing arms 18 and 20 to rotate about their respective rotation axes A and B in a synchronized manner.

In the shown example, in particular, each swing arm 20 is preferably substantially coplanar to a respective swing arm 18, and the corresponding longitudinal connecting rod 25 extends more or less parallel to the vertical midplane of the vehicle P, preferably inside the corresponding longitudinal beam 11.

With reference to Figures 2, 3 and 4, each longitudinal connecting rod 25 moreover comprises: two or more rectilinear struts or bars 26 preferably made of metallic material, which are firmly coupled to each other in axially slidable manner; and a locking member 27 which is adapted to selectively rigidly couple the rectilinear bars 26 to one another in order to prevent any relative movement of the struts.

More in detail, in the shown example, the longitudinal connecting rod 25 preferably comprises two rectilinear tubular segments 26 that are telescopically fitted one into the other, and are butt hinged one to the swing arm 18 and the other to the swing arm 20.

The locking member 27, on the other hand, is preferably stably fixed on one of the two rectilinear tubular segments 26, preferably at the axial end opposite to the one hinged to the swing arm 18 or 20.

Preferably, the locking member 27 is additionally electrically-, hydraulically- or pneumatically- operated.

More specifically, the locking member 27 preferably comprises: a latch (not shown in the figures) which is movable transversely, or rather orthogonally, with respect to the longitudinal axis of the tubular segments, between a first operating position in which the latch preferably engages in pass-through manner both rectilinear tubular segments 26 so as to prevent any relative axial movement of the segments, and a second operating position in which the latch does not engage at least one of the two rectilinear tubular segments 26 so as to allow the two tubular segments 26 to slide axially relative to each other; and a hydraulically or pneumatically or electrically operated, actuator 29 which is adapted to move, on command, the latch from the first to the second operating position and vice versa.

In the example shown, in particular, the actuator 29 is preferably a single or double-acting hydraulic or pneumatic cylinder.

With reference to Figures 1 and 2, the drive unit 3 on the other hand preferably houses: the preferably electrically- or combustion-operated propeller (not shown) which is adapted to drive into rotation the two rear ground-resting wheels 5; the steering mechanism of the two rear ground-resting wheels 5; and finally the cockpit 29 designed to house the driver of the vehicle and which preferably internally accommodates the steering wheel and the other control members essential for driving the self-propelled vehicle 1.

General operation of the self-propelled vehicle 1 is similar to the one of a traditional self-propelled transporter for handling large-sized plate racks.

Unlike the self-propelled transporters currently on the market, however, the self-propelled vehicle 1 is able to vary the axial length of the front rack-supporting chassis 2, so as to be able to grab, lift, move horizontally and finally lay again on the ground also glass-supporting racks 100 suitable for supporting glass sheets 15 meters long.

More in detail, assuming that the front rack-supporting chassis 2 is normally dimensioned to receive and move glass-sheet supporting racks 100 suitable for up to 9-meters-long glass sheets and that the self-propelled vehicle 1 must temporarily handle a glass-sheet supporting rack 100 suitable for supporting nearly-15-meters-long glass sheets, the operator commands the locking members 27 of the two longitudinal connecting rods 25 to unlock the sliding movement of the tubular segments 26, and then slowly moves backwards the drive unit 3 so as to extract the front rectilinear segments 14 of the two longitudinal beams 11.

After bringing the front rectilinear segments 14 into the fully extracted position, the operator commands the locking members 27 of the two longitudinal connecting rods 25 to lock the sliding movement of the tubular segments 26 so as to restore the normal operation of the vehicle and be able to handle glass-sheet supporting racks 100 for glass sheets with a length of about 15 meters.

The advantages related to the particular structure of the rack-supporting chassis 2 are considerable.

Thanks to the two telescopic longitudinal beams 11, the rack-supporting chassis 2 can be rapidly configured to move glass-sheet supporting racks 100 for glass sheets with a length of 9 meters and glass-sheet supporting racks 100 for glass sheets with a length of 15 meters.

Moreover, the possibility of reducing, if necessary, the axial length of the rack-supporting chassis 2 significantly improves the maneuverability of the self-propelled vehicle 1 in confined spaces, with all the advantages that this entails.

Finally, the two telescopic longitudinal connecting rods 25 maintain the rack-supporting chassis 2 perfectly parallel to the ground, thus the self-propelled vehicle 1 does not need to be equipped with an electro-hydraulic or electro-pneumatic control system for coordinating the operation of the four cylinders 19 and 23, thus avoiding the costs resulting from the continuous maintenance of said system.

Finally, it is clear that modifications and variations can be made to the self-propelled vehicle 1 described above.

For example, in a more sophisticated embodiment, the rack-supporting chassis 2 may optionally comprise a preferably hydraulically- or pneumatically- operated, moving device which is arranged aboard of the rigid oblong frame 10 and is adapted to axially move the front rectilinear segments 14 of the two longitudinal beams 11 from the retracted position to the fully extracted position and vice versa.

More in detail, the moving device could comprise two single- or double-acting hydraulic or pneumatic cylinders that extend parallel to the longitudinal axis of the vehicle L and are arranged, on the rigid oblong frame 10, each astride the front rectilinear segment 14 and the rear rectilinear segment 15 of a respective longitudinal beam 11, so as to be able to axially move the front rectilinear segment 14 from the retracted position to the fully extracted position and vice versa.

## Claims

1. Self-propelled vehicle (1) for handling glass-sheet supporting racks (100) and which comprises a front rack-supporting chassis (2) and a rear drive unit (3), both provided with ground-resting wheels (4, 5);
the rack-supporting chassis (2) comprising a substantially U-shaped rigid oblong frame (10) which is provided with two longitudinal beams (11) that extend substantially horizontal and parallel to the longitudinal axis of the vehicle (L), in substantially specular position on opposite sides of the vertical midplane of the vehicle (P), so as to form a rectilinear groove or slot (12) adapted to be engaged by a glass-sheet supporting rack (100); the rear drive unit (3) being connected to the rack-supporting chassis (2) by mechanical coupling means (6) allowing the rack-supporting chassis (2) to move vertically with respect to the drive unit (3);
the self-propelled vehicle (1) being **characterised in that** each longitudinal beam (11) is divided into a front rectilinear segment (14) and a rear rectilinear segment (15), which are coupled in axially sliding manner so as to vary the total axial length (f) of the longitudinal beam (11) between a given maximum value and a given minimum value.

2. Self-propelled vehicle according to claim 1, **characterised in that** the mechanical coupling means (6) comprise a swing arm linkage (6) that allows the front rack-supporting chassis (2) to move with respect to the rear drive unit (3) while remaining on the vertical midplane of the vehicle (P).

3. Self-propelled vehicle according to claim 1 or 2, **characterised in that** the front rack-supporting chassis (2) is provided with at least two front ground-resting wheels (4) that are arranged on the front rectilinear segments (14) of the two longitudinal beams (11), on opposite sides with respect to the vertical midplane of the vehicle (P).

4. Self-propelled vehicle according to claim 3, **characterised in that** each front ground-resting wheel (4) is secured/connected to the corresponding front rectilinear segment (14) through a respective swing arm suspension (17).

5. Self-propelled vehicle according to claim 4, **characterised in that** the swing arm suspension (17) comprises a swing arm (18) that extends substantially parallel to the vertical midplane of the vehicle (P) and is pivoted on the body of the front rectilinear segment (14) so as to be able to rotate about a transversal rotation axis (A) substantially perpendicular to the vertical midplane of the vehicle (P); the front ground-resting wheel (4) being secured in axially rotating manner to an end of the swing arm (18).

6. Self-propelled vehicle according to claim 5, **characterised in that** the swing arm suspension (17) moreover comprises a hydraulic or pneumatic cylinder (19), which is interposed between the swing arm (18) and the front rectilinear segment (14) and is capable of varying the tilt angle of the swing arm (18) with respect to the vertical.

7. Self-propelled vehicle according to claim 4, 5 or 6, **characterised by** further comprising two longitudinal connecting rods (25) which are adapted to mechanically connect the two swing arm suspensions (17) with the swing arm linkage (6).

8. Self-propelled vehicle according to claim 7, **characterised in that** each longitudinal connecting rod (25) is butt hinged respectively to a swing arm (18) of the swing arm suspension (17) and to a swing arm (20) of the swing arm linkage (6) so as to force said swing arms (18, 20) to rotate in a synchronized manner.

9. Self-propelled vehicle according to claim 7 or 8, **characterised in that** each longitudinal connecting rod (25) comprises at least two rectilinear struts or bars (26) firmly coupled to one another in axially slidable manner; and a locking member (27) adapted to selectively connect the rectilinear struts (26) rigidly to each other to prevent any relative movement of the same struts.

10. Self-propelled vehicle according to claim 9, **characterised in that** the locking member (27) is electrically, hydraulically or pneumatically operated.

11. Self-propelled vehicle according to claim 10, **characterised in that** the locking member (27) comprises: a latch which is movable transversely to the rectilinear struts or bars (26) between a first operating position in which the latch engages the rectilinear struts or bars (26) so as to prevent any relative axial movement of the rectilinear struts or bars (26), and a second operating position in which the latch does not engage at least one of the two rectilinear struts or bars (26) so that the two rectilinear struts or bars (26) can slide relative to each other; and an electrically-, hydraulically- or pneumatically- operated actuator (29) which is adapted to move, on command, the latch from the first to the second operating position and vice versa.

12. Self-propelled vehicle according to any one of claims 2 to 11, **characterised in that** the swing arm linkage (6) comprises at least one swing arm (20) which extends substantially parallel to the vertical midplane of the vehicle (P), has an end hinged to the vehicle body (21) of the rear drive unit (3) so as to be able to rotate with respect to the latter parallel to the vertical midplane of the vehicle (P), and is pivotally joined to the rigid oblong frame (10) of the rack-supporting chassis (2) so as to be able to rotate with respect to the latter about an rotation axis (B) substantially perpendicular to the vertical midplane of the vehicle (P).

13. Self-propelled vehicle according to claim 12, **characterised in that** the swing arm linkage (6) comprises a pair of swing arms (20) which are arranged in substantially specular position on opposite sides of the vertical midplane of the vehicle (P), each aligned with a respective longitudinal beam (11) of the rigid oblong frame (10), and which are rigidly connected to each other.

14. Self-propelled vehicle according to claim 12 or 13, **characterised by** additionally comprising also at least a second hydraulic or pneumatic cylinder (23) which is interposed between a respective swing arm (20) of the swing arm linkage (6) and the rigid oblong frame (10) so as to be able to control/vary the tilt angle of the swing arm (20) with respect to the vertical.

15. Self-propelled vehicle according to any one of the preceding claims, **characterised in that** the rear drive unit (3) is provided with at least two rear ground-resting wheels (5) that are driving and steering wheels and are arranged on opposite sides of the vertical midplane of the vehicle (P).

## Patentansprüche

1. Selbstfahrendes Fahrzeug (1) zum Handhaben von Traggestellen (100) für Glasscheiben, welches ein vorderes Gestelltragfahrgestell (2) und eine hintere Antriebseinheit (3) aufweist, die beide mit auf dem Boden ruhenden Rädern (4, 5) versehen sind;
wobei das Gestelltragfahrgestell (2) einen im Wesentlichen U-förmigen starren länglichen Rahmen (10) aufweist, der mit zwei Längsträgern (11) versehen ist, die sich im Wesentlichen horizontal und parallel zu der Längsachse (L) des Fahrzeugs erstrecken, und zwar in einer im Wesentlichen spiegelbildlichen Position auf gegenüberliegenden Seiten der vertikalen Mitttelebene (P) des Fahrzeugs, so dass eine geradlinige Nut oder ein geradliniger Schlitz (12) gebildet wird, die bzw. der ausgebildet ist, um mit einem Traggestell (100) für Glasscheiben in Eingriff zu kommen; wobei die hintere Antriebseinheit (3) mit dem Gestelltragfahrgestell (2) durch mechanische Koppelungsmittel (6) verbunden ist, welche gestatten, dass das Gestelltragfahrgestell (2) sich vertikal bezüglich der Antriebseinheit (3) bewegt;
wobei das selbstfahrende Fahrzeug (1) **dadurch gekennzeichnet ist, dass** jeder Längsträger (11) in ein vorderes geradliniges Segment (14) und ein hinteres geradliniges Segment (15) aufgeteilt ist, welche in axial verschiebbarer Weise gekoppelt sind, um die gesamte Axial-Länge (f) des Längsträgers (11) zwischen einem vorgegebenen maximalen Wert und einem vorgegebenen minimalen Wert zu variieren.

2. Selbstfahrendes Fahrzeug nach Anspruch 1, **dadurch gekennzeichnet, dass** die mechanischen Koppelungsmittel (6) ein Schwenkarmverbindungselement (6) aufweisen, welche gestattet, dass das vordere Gestelltragfahrgestell (2) sich bezüglich der hinteren Antriebseinheit (3) bewegt, während sie auf der vertikalen Mittelebene (P) des Fahrzeugs bleiben.

3. Selbstfahrendes Fahrzeug nach Anspruch 1 oder 2, **dadurch gekennzeichnet, dass** das vordere Gestelltragfahrgestell (2) mit mindestens zwei vorderen auf dem Boden ruhenden Rädern (4) versehen ist, die an den vorderen geradlinigen Segmenten (14) der zwei Längsträger (11) angeordnet sind, und zwar auf gegenüberliegenden Seiten bezüglich der vertikalen Mittelebene (P) des Fahrzeugs.

4. Selbstfahrendes Fahrzeug nach Anspruch 3, **dadurch gekennzeichnet, dass** jedes auf dem Boden ruhende Rad (4) an dem entsprechenden vorderen geradlinigen Segment (14) durch eine entsprechende Schwenkarmaufhängung (17) gesichert ist bzw. damit verbunden ist.

5. Selbstfahrendes Fahrzeug nach Anspruch 4, **dadurch gekennzeichnet, dass** die Schwenkarmaufhängung (17) einen Schwenkarm (18) aufweist, welcher sich im Wesentlichen parallel zu der vertikalen Mittelebene (P) des Fahrzeugs erstreckt, und an dem Körper des vorderen geradlinigen Segmentes (14) schwenkbar befestigt ist, so dass er um eine Querdrehachse (A) drehen kann, welche im Wesentlichen senkrecht zu der vertikalen Mittelebene (P) des Fahrzeugs ist; wobei das vordere auf dem Boden ruhende Rad (4) in axial drehender Weise an einem Ende des Schwenkarms (18) befestigt ist.

6. Selbstfahrendes Fahrzeug nach Anspruch 5, **dadurch gekennzeichnet, dass** die Schenkarmaufhängung (17) weiter einen Hydraulik- oder Pneumatikzylinder (19) aufweist, der zwischen dem Schwenkarm (18) und dem vorderen geradlinigen Segment (14) angeordnet ist, und fähig ist, den Kippwinkel des Schwenkarms (18) bezüglich der Vertikalen zu variieren.

7. Selbstfahrendes Fahrzeug nach Anspruch 4, 5 oder 6, **dadurch gekennzeichnet, dass** es weiter zwei Längsverbindungsstangen (25) aufweist, die ausgebildet sind, um mechanisch die zwei Schwenkarmaufhängungen (17) mit dem Schwenkarmverbindungselement (6) zu verbinden.

8. Selbstfahrendes Fahrzeug nach Anspruch 7, **dadurch gekennzeichnet, dass** jede Längsverbindungsstange (25) jeweils mittels Scharnieren mit einem Schwenkarm (18) der Schwenkarmaufhängung (17) und mit einem Schwenkarm (20) des Schwenkarmverbindungselements (6) verbunden ist, um die Schwenkarme (18, 20) dazu zu zwingen, sich in synchronisierter Weise zu drehen.

9. Selbstfahrendes Fahrzeug nach Anspruch 7 oder 8, **dadurch gekennzeichnet, dass** jede Längsverbindungsstange (25) zumindest zwei geradlinige Streben oder Stange (26) aufweist, welche in einer axial verschiebbaren Weise fest miteinander gekoppelt sind; und durch ein Verriegelungsglied (27), welches ausgebildet ist, um selektiv die geradlinigen Streben (26) starr miteinander zu verbinden, um irgendeine Relativbewegung dieser Streben zu verhindern.

10. Selbstfahrendes Fahrzeug nach Anspruch 9, **dadurch gekennzeichnet, dass** das Verriegelungsglied (27) elektrisch, hydraulisch oder pneumatisch betätigt ist.

11. Selbstfahrendes Fahrzeug nach Anspruch 10, **dadurch gekennzeichnet, dass** das Verriegelungsglied (27) Folgendes aufweist: eine Sperre, die quer zu den geradlinigen Streben oder Stangen (26) bewegbar ist, und zwar zwischen einer ersten Betriebsposition, in welcher die Sperre mit den geradlinigen Streben oder Stangen (26) in Eingriff ist, um irgendeine relative Axialbewegung der geradlinigen Streben oder Stangen (26) zu verhindern, und einer zweiten Betriebsposition, in welcher die Sperre nicht mit mindestens einer der zwei geradlinigen Streben oder Stangen (26) in Eingriff kommt, so dass die zwei geradlinigen Streben oder Stangen (26) relativ zueinander gleiten können; und eine elektrisch, hydraulisch oder pneumatisch betriebene Betätigungsvorrichtung (29), welche ausgebildet ist, um auf einen Befehl hin die Sperre von der ersten in die zweite Betriebsposition und umgekehrt zu bewegen.

12. Selbstfahrendes Fahrzeug nach einem der Ansprüche 2 bis 11, **dadurch gekennzeichnet, dass** das Schwenkarmverbindungselement (6) zumindest einen Schwenkarm (20) aufweist, der sich im Wesentlichen parallel zu der vertikalen Mittelebene (P) des Fahrzeugs erstreckt, wobei ein Ende durch ein Scharnier mit dem Fahrzeugkörper (21) der hinteren Antriebseinheit (3) verbunden ist, so dass es fähig ist, sich bezüglich des Letzteren parallel zu der vertikalen Mittelebene (P) des Fahrzeugs zu drehen, und schwenkbar mit dem starren länglichen Rahmen (10) des Gestelltragfahrgestells (2) verbunden ist, so dass er fähig ist, sich bezüglich des Letzteren um eine Drehachse (B) zu drehen, die im Wesentlichen senkrecht zu der vertikalen Mittelebene (P) des Fahrzeugs ist.

13. Selbstfahrendes Fahrzeug nach Anspruch 12, **dadurch gekennzeichnet, dass** das Schenkarmverbindungselement (6) ein Paar von Schwenkarmen (20) aufweist, die in einer im Wesentlichen spiegelbildlichen Position auf gegenüberliegenden Seiten der vertikalen Mittelebene (P) des Fahrzeugs angeordnet sind, die jeweils mit einem entsprechenden Längsträger (11) des starren länglichen Rahmens (10) ausgerichtet sind, und die starr miteinander verbunden sind.

14. Selbstfahrendes Fahrzeug nach Anspruch 12 oder 13, **dadurch gekennzeichnet, dass** es zusätzlich auch zumindest einen zweiten Hydraulik- oder Pneumatikzylinder (23) aufweist, der zwischen einem entsprechenden Schwenkarm (20) des Schwenkarmverbindungselements (6) und dem starren länglichen Rahmen (10) angeordnet ist, so dass er fähig ist den Kippwinkel des Schwenkarms (20) bezüglich der Vertikalen zu steuern/variieren.

15. Selbstfahrendes Fahrzeug nach einem der vorhergehenden Ansprüche, **dadurch gekennzeichnet, dass** die hintere Antriebseinheit (3) mit mindestens zwei auf dem Boden ruhenden Rädern (5) versehen ist, welche Antriebs- und Lenkräder sind, und welche auf gegenüberliegenden Seiten der vertikalen Mittelebene (P) des Fahrzeugs angeordnet sind.

## Revendications

1. Véhicule automoteur (1) pour manipuler des bâtis (100) supportant des feuilles de verre et comprenant un châssis de support avant (2) et une unité d'entraînement arrière (3), tous deux munis de roues d'appui au sol (4, 5);
le châssis de support (2) comprenant un cadre oblong rigide sensiblement en forme de U (10) qui est pourvu de deux poutres longitudinales (11) qui s'étendent sensiblement horizontalement et parallèlement à l'axe longitudinal du véhicule (L), dans des positions sensiblement spéculaires sur les côtés opposés du plan médian vertical du véhicule (P), de manière à former une rainure ou une fente rectiligne (12) adaptée pour l'engagement d'un bâti supportant des feuilles de verre (100); l'unité d'entraînement arrière (3) étant connectée au châssis de support (2) par des moyens d'accouplement mécanique (6) permettant au châssis de support (2) de se déplacer verticalement par rapport à l'unité d'entraînement (3);
le véhicule automoteur (1) étant **caractérisé en ce que** chaque poutre longitudinale (11) est divisée en un segment rectiligne avant (14) et un segment rectiligne arrière (15), qui sont couplés de manière à coulisser axialement afin de faire varier la longueur axiale totale (f) de la poutre longitudinale (11) entre une valeur maximale donnée et une valeur minimale donnée.

2. Véhicule automoteur selon la revendication 1, **caractérisé en ce que** les moyens d'accouplement mécanique (6) comprennent une liaison à bras pivotant (6) qui permet au châssis de support avant (2) de se déplacer par rapport à l'unité d'entraînement arrière (3). tout en restant sur le plan médian vertical du véhicule (P).

3. Véhicule automoteur selon la revendication 1 ou 2, **caractérisé en ce que** le châssis de support avant (2) est pourvu d'au moins deux roues avant d'appui au sol (4) qui sont agencées sur les segments rectilignes avant (14) des poutres longitudinales (11), sur les côtés opposés par rapport au plan médian vertical du véhicule (P).

4. Véhicule automoteur selon la revendication 3, **caractérisé en ce que** chaque roue avant d'appui au sol (4) est fixée / reliée au segment rectiligne avant correspondant (14) par l'intermédiaire d'une suspension respective à bras pivotant (17).

5. Véhicule automoteur selon la revendication 4, **caractérisé en ce que** la suspension à bras pivotant (17) comprend un bras pivotant (18) qui s'étend sensiblement parallèlement au plan médian vertical du véhicule (P) et pivote sur le corps du segment rectiligne avant (14) de manière à pouvoir tourner autour d'un axe de rotation transversal (A) sensiblement perpendiculaire au plan médian vertical du véhicule (P); la roue avant d'appui au sol (4) étant fixée axialement de manière à tourner par rapport à une extrémité du bras pivotant (18).

6. Véhicule automoteur selon la revendication 5, **caractérisé en ce que** la suspension à bras pivotant (17) comprend en outre un vérin hydraulique ou pneumatique (19), qui est interposé entre le bras pivotant (18) et le segment rectiligne avant (14) et est capable de faire varier l'angle d'inclinaison du bras pivotant (18) par rapport à la verticale.

7. Véhicule automoteur selon la revendication 4, 5 ou 6, **caractérisé en ce qu'**il comprend en outre deux bielles longitudinales (25) qui sont adaptées pour relier mécaniquement les deux suspensions à bras pivotant (17) à la liaison à bras pivotant (6).

8. Véhicule automoteur selon la revendication 7, **caractérisé en ce que** chaque bielle longitudinale de liaison (25) est articulée par aboutement respectivement sur un bras pivotant (18) de la suspension à bras pivotant (17) et sur un bras pivotant (20) de la liaison à bras pivotant (6) de manière à forcer lesdits bras pivotants (18, 20) à tourner de manière synchronisée.

9. Véhicule automoteur selon la revendication 7 ou 8, **caractérisé en ce que** chaque bielle longitudinale (25) comprend au moins deux jambes ou barres rectilignes (26) couplées solidement l'une à l'autre de manière à pouvoir coulisser axialement; et un élément de verrouillage (27) adapté pour relier sélectivement les barres rectilignes (26) de manière rigide l'une à l'autre pour empêcher tout mouvement relatif des mêmes barres.

10. Véhicule automoteur selon la revendication 9, **caractérisé en ce que** l'élément de verrouillage (27) est actionné électriquement, hydrauliquement ou pneumatiquement.

11. Véhicule automoteur selon la revendication 10, **caractérisé en ce que** l'élément de verrouillage (27) comprend : un verrou qui est déplaçable transversalement par rapport aux jambes ou aux barres rectilignes (26) entre une première position de fonctionnement dans laquelle le verrou s'engage dans les jambes ou les barres rectilignes (26), de manière à empêcher tout mouvement axial relatif des jambes ou barres rectilignes (26), et une seconde position de fonctionnement dans laquelle le verrou ne vient pas en prise avec au moins l'une des deux jambes ou barres rectilignes (26), de sorte que les deux jambes ou barres rectilignes (26) peuvent coulisser l'une par rapport à l'autre; et un actionneur (29) fonctionnant électriquement, hydrauliquement ou pneumatiquement qui est adapté pour déplacer, sur commande, le verrou de la première à la deuxième position de fonctionnement et vice versa.

12. Véhicule automoteur selon l'une quelconque des revendications 2 à 11, **caractérisé en ce que** la liaison à bras pivotant (6) comprend au moins un bras pivotant (20) qui s'étend sensiblement parallèlement au plan médian vertical du véhicule (P), présente une extrémité articulée par rapport au corps du véhicule (21) de l'unité d'entraînement arrière (3) de manière à pouvoir tourner par rapport à celle-ci parallèlement au plan médian vertical du véhicule (P), et est reliée de manière pivotante au cadre rigide oblong (10) du châssis de support (2) de manière à pouvoir tourner par rapport à ce dernier autour d'un axe de rotation (B) sensiblement perpendiculaire au plan médian vertical du véhicule (P).

13. Véhicule automoteur selon la revendication 12, **caractérisé en ce que** la liaison à bras pivotant (6) comprend une paire de bras pivotants (20) qui sont disposés dans une position sensiblement spéculaire sur les côtés opposés du plan médian vertical du véhicule (P), chacun aligné avec une poutre longitudinale respective (11) du cadre oblong rigide (10), et qui sont reliés rigidement l'un à l'autre.

14. Véhicule automoteur selon la revendication 12 ou 13, **caractérisé en ce qu'**il comprend en outre au moins un second cylindre hydraulique ou pneumatique (23) qui est interposé entre un bras pivotant respectif (20) de la liaison à bras oscillant (6) et le cadre oblong rigide (10) de manière à pouvoir contrôler / faire varier l'angle d'inclinaison du bras pivotant (20) par rapport à la verticale.

15. Véhicule automoteur selon l'une quelconque des revendications précédentes, **caractérisé en ce que** l'unité d'entraînement arrière (3) est pourvue d'au moins deux roues arrière d'appui au sol (5) qui sont des roues motrices et des roues directrices et sont disposées sur les côtés opposés du plan médian vertical du véhicule (P).
